# EUROPÄISCHE PATENTSCHRIFT

(11) **EP 2 416 036 B1**
(45) Veröffentlichungstag und Bekanntmachung des Hinweises auf die Patenterteilung: **21.05.2014**
(21) Anmeldenummer: 11175456.0
(22) Anmeldetag: 26.07.2011
(51) Int. Cl.: F16H 57/04

(54) **Ausgleichseinheit und Antriebsstrang eines Kraftfahrzeugs zur verlustminimierten Bedarfsbeölung**
Differential unit and power transmission of a motor vehicle for loss-minimising oiling as needed
Unité différentielle et chaîne cinématique d'un véhicule automobile pour la lubrification en fonction du besoin avec pertes minimisées

(30) Priorität: 03.08.2010 DE 102010036826
(43) Veröffentlichungstag der Anmeldung: 08.02.2012
(73) Patentinhaber: GKN Driveline Köping AB, 731 36 Köping (SE)
(72) Erfinder: Nett, Hans-Peter, 53518 Adenau (DE); Göttert, Christoph, 50670 Köln (DE); Müllers, Michael, 50733 Köln (DE); Haupt, Jan, 51515 Kürten (DE)
(74) Vertreter: Tersteegen, Felix

(56) Entgegenhaltungen:
- EP-A2- 0 875 690
- DE-A1-102007 022 182
- DE-A1-102008 000 777
- DE-A1-102008 001 889
- DE-A1-102008 002 844
- GB-A- 2 455 198
- US-A- 1 380 584
- US-A- 3 741 343
- US-A- 4 901 598
- US-A1- 2004 224 809

## Beschreibung

Die Erfindung betrifft eine Ausgleichseinheit eines Antriebsstrangs eines Kraftfahrzeugs mit den Merkmalen des Oberbegriffs des Anspruchs 1 und einen Antriebsstrang eines Kraftfahrzeugs mit den Merkmalen des Oberbegriffs des Anspruchs 10.

Der vorstehend beschriebene Aufbau einer Ausgleichseinheit und eines Antriebsstrangs ist aus der deutschen Offenlegungsschrift DE 10 2008 002 844 A1 bekannt. Dort ist ein Antriebsstrang für ein Kraftfahrzeug gezeigt, der eine differentiallose Querausgleichseinheit offenbart, bei der die Ausgangswellen zum Antrieb der Antriebsräder über zwei individuell ansteuerbare Seitenwellenkupplungen angetrieben werden. Die Seitenwellenkupplungen sind von Lamellenpaketen gebildet, die zur Kühlung und Schmierung beölt werden müssen. Die Außenlamellen des Lamellenpakets sind drehfest mit einer von der Eingangswelle angetriebenen Zwischenwelle - in der DE 10 2008 002 844 A1 ist dies die Tellerradträgerwelle - verbunden und fördern durch Ihre spezielle Ausgestaltung das Öl nach außen in eine im Gehäuse vorgesehene Ölauffangtasche, von wo das Öl über Gehäusebohrungen zum Inneren des Lamellenpakets zurückfließt und dort erneut von den Lamellen erfasst wird, so dass sich - bezogen auf ein Lamellenpaket einer Seitenwellenkupplung - ein innerer Ölkreislauf ausbildet.

Wegen dieses inneren Ölkreislaufs verweilt ein großer Teil des zur Kühlung und Schmierung aufgewendeten Ölvolumens lange in dem beschriebenen inneren Ölkreislauf, ohne das sich das Ölvolumen ausreichend mit "frischem" Öl vermischt oder durch dieses ersetzt wird. Ölvolumen, dass gerade erst zwischen den Kupplungslammellen Wärme aufgenommen hat, wird unmittelbar wieder in zu den Lamellen zurückgeführt. Die Kupplungstemperatur steigt daher überproportional zu der Kühlleistung, die mit der in der Ausgleichseinheit vorhandenen Ölmenge erreichbar wäre. Die überproportionale Erwärmung der Kupplungen bringt Nachteile hinsichtlich des Verschleißverhaltens und somit der Lebensdauer sowie hinsichtlich des Ansprech- und Regelverhaltens mit sich.

Ein weiterer Nachteil der in der DE 10 2008 002 844 A1 gezeigten Ausführung ist, dass die Kupplungspakete der Seitenwellenkupplungen im Öl stehen, um dieses zu erfassen und zur Ölauffangtasche zu fördern. Die hiermit einhergehenden Planschverluste erhöhen die Verlustleistung des Antriebstrangs.

Hinsichtlich der unerwünschten Verlustleistung kommt hinzu, dass selbst in dem in der DE 10 2008 002 844 A1 beschriebenen Fall, dass der Sekundärteil des Antriebsstrangs-von den Antriebsrädern entkoppelt ist und die Seitenwellenkupplungen vollständig geöffnet sind, die Sekundärantriebsräder im Fahrbetrieb auf der Straße abrollen und den Innenlamellenträger und die damit drehfest verbundenen Innenlamellen schleppen. Die Innenlamellen stehen jedoch in ständigem Kontakt mit dem Öl, da sie darin eintauchen. Nicht nur der Bereich des äußerst schmalen Lüftspalts (Spaltbreite ca. 0,1 mm) zwischen Innen- und Außenlamellen, der sich unmittelbar im Öl befindet, ist mit Öl gefüllt, sondern das Öl wird zudem durch die rotierenden Innenlamellen auch in den nicht im Öl stehenden Zwischenraum zwischen Innen- und Außenlamellen der Lamellenkupplung gefördert. Die in der Folge erzeugte Flüssigkeitsreibung bzw. hydrodynamische Reibung überträgt wiederum das von den Sekundärantriebsrädern auf die Innenlamellen wirkende Schleppmoment auf die Außenlamellen und treibt diese hierdurch an. Sobald diese aber zu rotieren beginnen, fördern sie ihrerseits wiederum Öl in den zuvor beschriebenen inneren Ölkreislauf und erhöhen ihrerseits somit das geförderte Ölvolumen und damit die Reib- bzw. Verlustleistung erneut. Der unerwünschte Effekt verstärkt sich selbst.

Versuche haben gezeigt, dass aufgrund dieses Effekts der Sekundärantriebsstrang entgegen den in der DE 10 2008 002 844 A1 gemachten Annahmen auch dann nicht zum Stillstand kommt, wenn er vom Primärteil des Antriebsstrangs entkoppelt ist. Durch die in der DE 10 2008 002 844 A1 vorgeschlagene reibungsarme Ausgestaltung der Oberflächen der Innenlamellen lassen sich die negativen Auswirkungen dieses Effekts nur sehr geringfügig verringern. Außerdem führen reibungsarme Oberflächen der Innenlamellen zu einem deutlich schlechteren Ansprech- und Regelverhalten des Kupplungspakets. Ein Nachteil, der schwerer wiegt als die bei der Verlustleistung durch diese Maßnahme erreichbaren Vorteile.

Aus den Druckschriften DE 10 2007 022 182 A1, US 1,380,584, US 3,741,343, US 2004/0224809 A1, EP 0 875 690 A2 ist es bekannt, Bauteile rotierende Bauteile einer Ausgleichseinheit als Ölfördereinrichtung zu verwenden. Diese Druckschriften beschäftigen sich allerdings nicht mit der Frage, wie eine durch eine ungewollte Beölung verursachte Verlustleistung vermieden werden kann und erlauben außerdem nicht das Abkoppeln des Sekundärteils des Antriebsstrangs vom Primärteil einerseits und von den Sekundärantriebsrädern andererseits.

Die Druckschrift GB 2 455 198 A1 offenbart, dass es bei einer geöffneten Kupplungsvorrichtung zu Verlustleistung kommen kann. Eine in einem Verteilergetriebe angeordnete Ölpumpe wird, wenn das Auto abgeschleppt wird, über den Sekundärteil des Antriebsstrangs geschleppt und fördert weiter Öl. Voraussetzung für das Funktionieren dieser Lehre ist, dass die Sekundärantriebsräder nicht vom Sekundärteil des Antriebsstrangs entkoppelt sind.

Vor diesem Hintergrund macht es sich die Erfindung zur Aufgabe, eine Ausgleicheinheit der eingangs genannten Art zur Verfügung zu stellen, bei der die vorstehend beschriebenen Nachteile vermieden werden. Insbesondere soll das in der DE 10 2008 002 844 A1 beschriebene Beölungskonzept hinsichtlich der hierdurch verursachten Verlustleistung bei vom Primärteil des Antriebstrangs entkoppeltem Sekundärteil optimiert werden, ohne Kompromisse beim Ansprech- und Regelverhalten der Kupplungspakete eingehen zu müssen.

Die Aufgabe wird in Bezug auf eine Ausgleichseinheit erfindungsgemäß durch die Merkmale des kennzeichnenden Teils das Anspruchs 1 und in Bezug auf einen Antriebsstrang durch die Merkmale des kennzeichnenden Teils des Anspruchs 10 gelöst.

Ferner kann vorgesehen sein, dass die Fördereinrichtung von einem von der Kupplungsvorrichtung entfernt angeordneten Ölförderrad gebildet ist. Die Anordnung des Ölförderrades entfernt von der Kupplungsvorrichtung führt dazu, dass das Öl nach einem Durchlauf durch die zu beölende Kupplungsvorrichtung stets in den Ölsumpf der Ausgleichseinheit zurückfließt, bevor es erneut in den Ölkreislauf eingespeist wird. Damit ist eine ausreichende Durchmischung des gesamten Ölvolumens und in der Folge die Ausnutzung der maximalen Kühlleistung der Gesamtölmenge jederzeit gewährleistet, was wiederum thermische Belastung der Kupplungsvorrichtungen verringert.

Bei dem Ausgleichsgetriebe kann es sich sowohl um eine Quer- als auch um eine Längsausgleichseinheit handeln. Besonders bevorzugt wird die Erfindung jedoch bei einer Querausgleichseinheit eingesetzt, insbesondere bei einer differentiallosen, rein reibschlüssig wirkenden Querausgleichseinheit, bei der die Seitenwellen der Antriebsräder über Seitenwellenkupplungen in den Antriebsleistungsfluss eingekoppelt werden, wie es in der DE 10 2008 002 844 bereits gezeigt ist. Grundsätzlich ist die Erfindung aber auch bei herkömmlichen, formschlüssig wirkenden Längs- und Querdifferentialen einsetzbar, um Kupplungspakete der Differentialsperren, sei es in Welle-Welle Anordnung oder in Welle-Korb Anordnung, zu beölen. Die Zwischen-welle wird bei einem herkömmlichen Differential von dem Differentialkorb gebildet.

Die genannte Ausgestaltung ermöglicht es außerdem, das Ölförderrad derart auszubilden, dass es das Kühl- und Schmieröl aus einem Ölsumpf mit einem unterhalb der Kupplungsvorrichtung liegenden Ölspiegels zu fördern vermag. Die Kupplungsvorrichtung, also insbesondere auch die geschleppten Kupplungskomponenten, können sich so dauerhaft oberhalb des Ölspiegels befinden. Selbst der radial außen liegende Außenlamellenträger und die Außenlamellen verursachen weder im Belastungsfall, also beispielsweise bei zugeschaltetem Sekundärteil des Antriebsstrangs, noch im geöffneten Modus, also bei abgeschaltetem Sekundärteil, Planschverluste.

Bevorzugt ist das Ölförderrad von einem auf der Zwischenwelle angeordneten Tellerrad gebildet, über das als Bestandteil des Winkelgetriebes die von der Eingangswelle eingebrachte Antriebsleistung auf die Zwischenwelle übertragen wird. Wenn aufgrund der Dimensionierung des Tellerrades das Tellerrad selbst nicht über einen ausreichenden Durchmesser verfügt, auch in einen unterhalb der Kupplungsvorrichtung liegenden Ölsumpf einzutauchen, kann vorgesehen sein, dass das Ölförderrad das auf der Zwischenwelle angeordnete Tellerrad umfasst, wobei das Tellerrad radial nach außen durch einen Ölförderring erweitert ist. Der Ölförderring kann als integraler, werkstoffeinstückiger Bestandteil des Tellerrades ausgebildet sein. Aus Gewichts- und Kostengründen und um zu beschleunigende und zu verzögernde Massen gering zu halten, bietet es sich jedoch an, den Ölförderring als separates Bauteil aus einem leichteren Material zu fertigen und mit dem Tellerrad zu verbinden, insbesondere mit diesem zu verschrauben.

Die Realisierung des Ölförderrades unter Zuhilfenahme eines im Leistungsfluss stehenden Zahnrads des Ausgleichsgetriebes ist nicht zwingend erforderlich. Es kann auch ein vom Tellerrad separates Ölförderrad auf der Eingangswelle oder der Zwischenwelle vorgesehen sein.

Um den Ölfluss zu erhöhen, können an der Innenseite des Gehäuses zumindest teilumlaufende Schottwände vorgesehen sein, die das seitliche Abfließen des vom Ölförderrad mitgenommenen Öls minimieren.

Trotz der vorstehend beschriebenen Verbesserungsmaßnahmen hat sich gezeigt, dass das Beölungskonzept noch weiter optimiert werden kann. Der eingangs erwähnte, sich selbst verstärkende Effekt einer durch die Schleppmomente der nicht angetriebenen, jedoch auf der Straße abrollenden Räder verursachten unerwünschten Kupplungsbeölung trotz entkoppeltem Sekundärteil des Antriebsstrangs konnte bei Versuchen nämlich trotz der vorstehend beschriebenen Abhilfemaßnahmen beobachtet werden.

In dem Moment, in dem die Kupplungsvorrichtung zur Entkopplung des Sekundärteils vom Primärteil des Antriebsstrangs geöffnet wird, wird durch das rotierende Ölförderrad, unter anderem aufgrund eines masseträgheitsbedingten Nachlaufens, noch Öl gefördert. Zudem befindet sich trotz geöffneter Kupplungen noch Öl zwischen den beiden Kupplungsseiten, so dass die Kupplung, obwohl sie sich im geöffneten Zustand befindet, eine Schleppleistung von der einen Kupplungsseite auf die andere Kupplungsseite überträgt. Letztere Kupplungsseite treibt als Antriebsglied des Sekundärteils des Antriebsstrangs wiederum das Ölförderrad an, das in der Folge die Ölförderung nicht wie eigentlich gewünscht komplett einstellt, sondern weiter Öl zur Kupplungsvorrichtung fördert. In Folge des nicht unterbrochenen Ölflusses stellt sich unterstützt durch die über das Schleppmoment eingebrachte Schleppleistung ein Gleichgewichtszustand ein, der den völligen Stillstand der Antriebsglieder des Sekundärteils des Antriebsstrangs verhindert. Der Sekundärteil dreht sich, obwohl dieser nicht in den Antriebsleistungsfluss integriert ist, ständig mit und verursacht Verlustleistung.

Um dieses Gleichgewicht zu unterbrechen, ist eine Abbrems- oder Entkopplungsvorrichtung vorgesehen, mittels der das Ölförderrad bei nicht bestehendem Beölungsbedarf der Kupplungsvorrichtung stillgelegt werden kann. Mit einer solchen Abbremsoder Entkopplungsvorrichtung lässt sich der sich ansonsten einstellende Gleichgewichtszustand wirksam verhindern, denn die Abbrems- oder Entkopplungsvorrichtung bewirkt, dass - je nachdem, wo und wie die Abbrems- oder Entkopplungsvorrichtung eingreift - die Schleppleistung von der einen Kupplungsseite nicht mehr auf die andere Kupplungsseite übertragen werden kann, weil bereits diese gebremst wird, und/oder weil durch das Entkoppeln des Ölförderrades von dessen Antriebsglied die Schleppleistung nicht auf das Ölförderrad übertragen wird. Sobald das Ölförderrad aber stillsteht wird der Ölstrom unterbrochen und die unerwünschte Beölung im geschleppten Zustand wird beendet. Die Kupplungsvorrichtung läuft sich zügig trocken und die beiden Kupplungsseiten drehen deutlich verlustärmer.

Da das Bremsmoment, das die Abbremsvorrichtung zur Stilllegung des Ölförderrades bereitstellen muss, nur gering ist, lässt sich die Abbremsvorrichtung auch unter Zuhilfenahme kleinerer Antriebsstrangkomponenten des Sekundärteils realisieren. Beispielsweise kann vorgesehen sein, dass die Bremsvorrichtung die Schiebemuffe einer Synchronisierungseinrichtung umfasst, die mit einem feststehenden Teil des Kraftfahrzeugs über eine Reibfläche zusammenwirkt und ein Bremsmoment zur Abbremsung der stillzulegenden Antriebsglieder des Sekundärteils zu erzeugen vermag. Dabei kann sich die Schiebemuffe zur Erzeugung des Reibmoments zum Beispiel gegen einen Lagerbock oder ein sonstiges Bauteil abstützen, das das Bremsmoment abzustützen vermag. Alternativ oder ergänzend kann die Schiebemuffe zur Erzeugung des Reibmoments eine einer Schaltgabel der Synchronisierungseinrichtung zugewandte Reibfläche aufweisen.

Der Erfindungsgedanke, die Ölfördereinrichtung durch eine Abbrems- oder Entkopplungseinrichtung stillzulegen, lässt sich nicht nur bei Ölfördereinrichtungen realisieren, die durch ein Ölförderrad gebildet sind. Dieser Erfindungsgedanke lässt sich vielmehr auch auf sonstige Ölfördereinrichtungen übertragen, die mit anderen Mitteln Öl zur Kupplungsvorrichtung fördern.

Daher wird sowohl als zur eingangs erwähnten Erfindung gehörig als auch als eigenständige Erfindung ein Aufbau eines Antriebsstrangs für ein Kraftfahrzeug angesehen, wobei der Antriebsstrang ein Ausgleichsgetriebe mit Antriebsgliedern aufweist, die eine Eingangswelle sowie zumindest eine erste Ausgangswelle umfassen, wobei die erste Ausgangswelle mit einer zweiten Ausgangswelle oder mit der Eingangswelle oder mit einem von der Eingangswelle angetriebenen Zwischenglied über eine zu beölende Kupplungsvorrichtung koppelbar ist, die über eine unmittelbar oder mittelbar über die Antriebsglieder angetriebene Fördereinrichtung mit Öl zu versorgen ist, wobei im Antriebsstrang eine Abbrems- oder Entkopplungsvorrichtung vorgesehen ist, mittels der die Fördereinrichtung bei nicht bestehendem Beölungsbedarf der Kupplungsvorrichtung stillgelegt werden kann.

Die zuvor beschriebene Bremsvorrichtung kann nicht nur auf Antriebsglieder der Ausgleichseinheit wirken. Insbesondere bei einem Antriebsstrang, der einen permanent angetriebenen Primärteil für den permanenten Antrieb von Primärantriebsrädern sowie einen Sekundärteil für den Antrieb von Sekundärantriebrädern aufweist, wobei der Sekundärteil im Bedarfsfall vom Primärteil und den Sekundärantriebsrädern abkoppelbar bzw. diesen zuschaltbar ist, kann die Abbremsvorrichtung auf beliebige Teile des Sekundärteils des Antriebstrangs wirken. Die Bremsvorrichtung muss also nicht notwendiger Weise Bestandteil der Ausgleichseinheit sein, sie muss lediglich irgendwo im stillzulegenden Sekundärteil des Antriebstrangs ein ausreichendes Reibmoment erzeugen.

Daher wird sowohl als zur eingangs erwähnten Erfindung gehörig als auch als eigenständige Erfindung ein Aufbau eines Antriebsstrangs für ein Kraftfahrzeug angesehen, bei dem der Antriebsstrang einen permanent angetriebenen Primärteil für den permanenten Antrieb von Primärantriebsrädern sowie einen Sekundärteil für den Antrieb von Sekundärantriebrädern aufweist, wobei der Sekundärteil im Bedarfsfall vom Primärteil und den Sekundärantriebsrädern abkoppelbar bzw. diesen zuschaltbar ist, und wobei im Sekundärteil zumindest eine Kupplungsvorrichtung vorgesehen ist, deren zumindest eine Kupplungsseite über die im Fahrzeugbetrieb auch bei abgekoppeltem Sekundärteil abrollenden Sekundärachsantriebsräder geschleppt wird und die bei zugeschaltetem Sekundärteil über eine unmittelbar oder mittelbar über Antriebsglieder des Sekundärteils angetriebene Fördereinrichtung mit Öl zu versorgen ist, wobei eine Abbremseinrichtung vorgesehen ist, mittels der der Sekundärteil im vom Primärteil abgekoppelten Zustand abgebremst werden kann.

Zusammenfassend wird ein überarbeitetes Beölungskonzept einer Ausgleichseinheit eines Antriebsstrangs eines Kraftfahrzeugs mit einer im Fahrbetrieb zu beölenden Kupplungseinrichtung sowie hiermit in Zusammenhang stehende Maßnahmen vorgeschlagen. Um Schleppmomente, die von außen auf die Kupplungseinrichtung einwirken und zu erhöhter Verlustleistung führen, zu unterbinden, wenn diese betriebszustandsbedingt nicht benötigt wird, sind Maßnahmen vorgesehen, die das Trockenlaufen der Kupplungsvorrichtung fördern. Zu den Maßnahmen gehören die räumlichfunktionale Trennung der Ölfördereinrichtung von der Kupplungsvorrichtung und das Vorsehen einer Abbrems- oder Entkopplungsvorrichtung, mittels der die Ölfördereinrichtung bei nicht vorhandenem Ölbedarf stillgelegt werden kann.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
Figur 1 einen aus dem Stand der Technik bekannten Antriebsstrangaufbau mit permanent angetriebenen Primärteil und einem im Bedarfsfall zuschaltbaren Sekundärteil mit einer differantiallosen Ausgleichseinheit zum Antrieb der Sekundärantriebsräder,
Figur 2 eine differentiallose Ausgleichseinheit während des Betriebs mit einem vom Tellerrad gebildeten Ölförderrad zur Kupplungsbeölung,
Figur 3 eine alternative Ausführungsform der differentiallosen Ausgleichseinheit im Stillstand mit einem schematisch dargestellten, an dem Tellerrad befestigten Ölfördering, und
Figur 4 eine für einen Antriebsstrang entsprechend Figur 1 vorgesehene Power-Takeoff-Unit (PTU) mit einer zusätzlichen Abbremsvorrichtung zum Abbremsen des Sekundärteils des Antriebsstrangs.

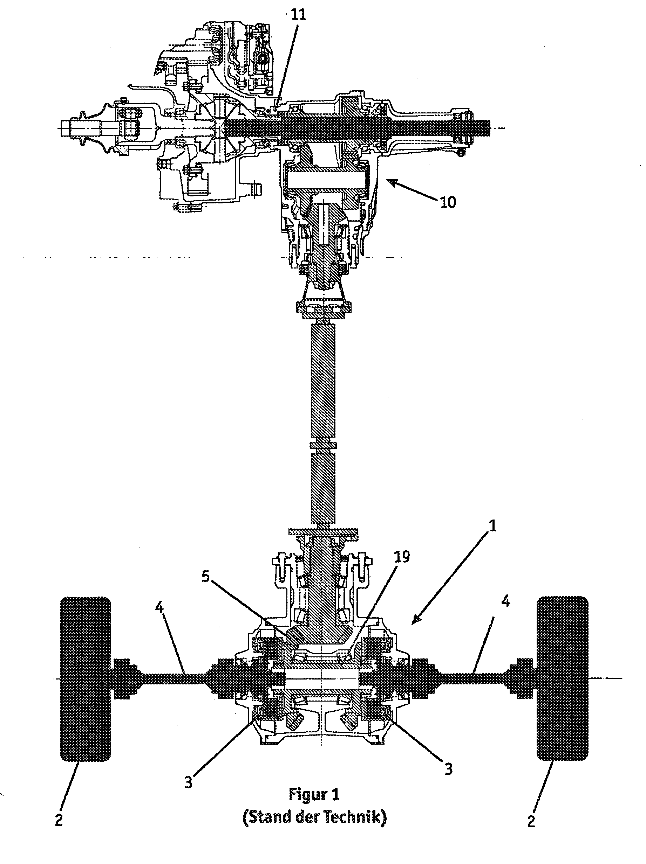

In Figur 1 ist ein aus dem Stand der Technik bekannter Antriebsstrangaufbau mit permanent angetriebenen Primärteil und einem nur im Bedarfsfall angetriebenen Sekundärteil mit einer differantiallosen Ausgleichseinheit 1 zum Antrieb der Sekundärantriebsräder 2 gezeigt. Der Sekundärteil des Antriebsstrangs, dessen Antriebsglieder vom Primärteil je nach Bedarfsfall abkoppelbar bzw. diesem zuschaltbar sind, sind schräg schraffiert gekennzeichnet, während diejenigen Antriebsglieder, die mit dem Sekundärteil im Fahrbetrieb zur Leistungsübertragung zusammenwirken und permanent rotieren, durchgehend schwarz gekennzeichnet sind.

Die Ausgleichseinheit 1 ist eine differentiallose Ausgleichseinheit, bei der der Leistungsfluss über zwei individuell ansteuerbare Kupplungsvorrichtungen, gebildet durch Seitenwellenkupplungen 3, und über die Halbwellen 4 auf die Sekundärantriebsräder 2 übertragen wird. Die Seitenwellenkupplungen 3, die von reibschlüssig wirkenden Lamellenkupplungen gebildet sind, gleichen dabei nicht nur die unterschiedlichen Abrollwege der Sekundärachsantriebsräder 2 bei Kurvenfahrten aus, sondern werden auch zur aktiven Beeinflussung des dynamischen Fahrverhaltens genutzt. Im Betrieb sind die Kupplungen mit Kühl- bzw. Schmieröl zu beölen.

Versuche mit dem in Figur 1 dargestellten System haben gezeigt, dass selbst dann, wenn der Sekundärteil des Antriebsstrangs vom Primärteil entkoppelt ist, insbesondere wenn dieser während der Fahrt und bei einer Geschwindigkeit ab ca. 50 km/h entkoppelt wird, die Antriebsglieder des Sekundärteils nicht wunschgemäß stillstehen, sondern durch die von den Sekundärantriebsrädern 4 in die Seitenwellenkupplungen 3 eingebrachte Schleppleistung weiterrotieren und somit Verlustleistung verursachen. Dies liegt, wie eingangs beschrieben, insbesondere an dem im Stand der Technik gewählten Beölungskonzept.

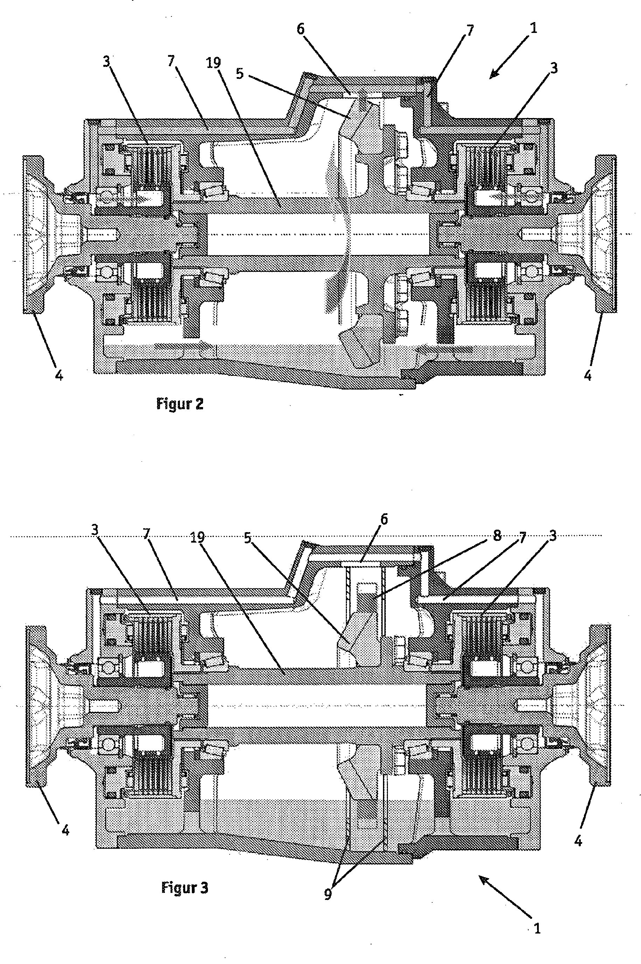

Figur 2 zeigt eine differentiallose Ausgleichseinheit 1 während des Betriebs mit einer über ein vom Tellerrad 5 gebildeten Ölförderrad zur Kupplungsbeölung. Das Tellerrad 5 schaufelt das Öl aufgrund seiner Rotation an der Gehäuseinnenwandung entlang zu einer im Gehäuse vorgesehenen Ölauffangtasche 6. Von dort aus gelangt es über Ölzuführungskanäle 7 zu den Seitenwellenkupplungen 3. Das Tellerrad 5 ist auf der Zwischenwelle 19 angeordnet und wird über eine Eingangswelle (nicht gezeigt) angetrieben.

Durch die Nutzung des Tellerrads als Ölforderrad bzw. Schaufelrad ist gegenüber einer Lösung, bei der die Lamellen der Seitenwellenkupplungen das Öl überwiegend fördern, gewährleistet, dass das von den Kupplungen zurückfließende Öl sich - bevor es erneut dem Ölkreislauf zugeführt wird - im Ölsumpf sammelt und mit dem gesamten Ölvolumen vermischt. Es wird verhindert, dass sich ein innerer Ölkreislauf ausbildet, aufgrund dessen das Öl, nachdem es durch die Kupplungen hindurch geflossen ist, diesen wieder unmittelbar zuführt wird, so dass sich dass Öl in der Folge überproportional erwärmen würde.

Figur 3 zeigt die Ausgleichseinheit aus Figur 2, wobei bei der in Figur 3 gezeigten Ausführung die Ausgleichseinheit stillsteht. Es ist zu erkennen, dass der Durchmesser des Tellerrads 5 nicht ausreicht, um in das Öl einzutauchen. Daher ist auf dem Tellerrad 5 ein nur schematisch dargestellter Ölförderring vorgesehen, der den Wirkdurchmesser des Tellerrads 5 in Bezug auf die Ölförderfähigkeit radial erweitert. Bei dem Ölförderring 8 muss es sich nicht notwendiger Weise um ein ringförmiges Bauteil handeln, sondern es können auch einzelne, nicht zusammenhängende Schaufeln am Tellerrad 5 angeordnet sein, die sich über dessen Umfang verteilen.

Ebenfalls nur schematisch dargestellt ist eine teilumlaufende Ölschottwand 9, die verhindert, dass das Öl beim Fördervorgang aus dem Ölsumpf zu der darüber liegenden Ölauffangtasche 6 fliehkraftbedingt seitlich abließen kann. Die Anwendung einer Schottwand 9 kann nicht nur bei einem Ölförderring verwendet werden. Sie eignet sich in gleicher Weise auch für eine Ausgestaltung nach Figur 2 oder für sonstige Anordnungen von Ölförderrädern auf der Zwischenwelle. Die Schottwand 9 ist bevorzugt beidseitig des Ölförderrades vorgesehen und kann entweder durch ein separat einzusetzendes Teil oder direkt durch einen nach innen ragenden Vorsprung oder eine Rippe des Gehäuses gebildet sein, wobei Bauraum- und Montageaspekte selbstverständlich zu berücksichtigen sind.

Außerdem ist in Figur 2 und Figur 3 zu erkennen, dass der Ölspiegel im Ölsumpf sowohl im Betriebszustand als auch bei Stillstand unterhalb der Seitenwellenkupplungen liegt. Auch dies trägt zur Verlustleistungsminimierung bei, da die von den Halbwellen 4 geschleppten Kupplungsglieder nicht im Öl stehen und somit kein Öl zwischen die Kupplungslamellen fördern können. In dem Fall, dass der Sekundärteil des Antriebstrangs vom Primärteil entkoppelt ist, können die Kupplungen also vollständig trocken und somit reibungsarm laufen.

Trotz der räumlichen-funktionalen Trennung von Kupplungsvorrichtung und Ölfördereinrichtung kann es, wie eingangs beschrieben, dazu kommen, dass der Sekundärteil des Antriebsstrangs nach Trennung vom Primärteil insbesondere als Folge des fortlaufenden Nachlaufens von Öl in die Kupplungsvorrichtung weiterrotiert und Verlustleistung verursacht. Um dies zu unterbinden und um zu ermöglichen, dass der Ölfluss vollständig unterbunden werden kann, ist eine Abbremsvorrichtung vorgesehen, die nachfolgend beispielhaft anhand einer speziellen Ausgestaltung der in Figur 1 gezeigten Power-Takeoff-Unit 10 (PTU) erläutert wird.

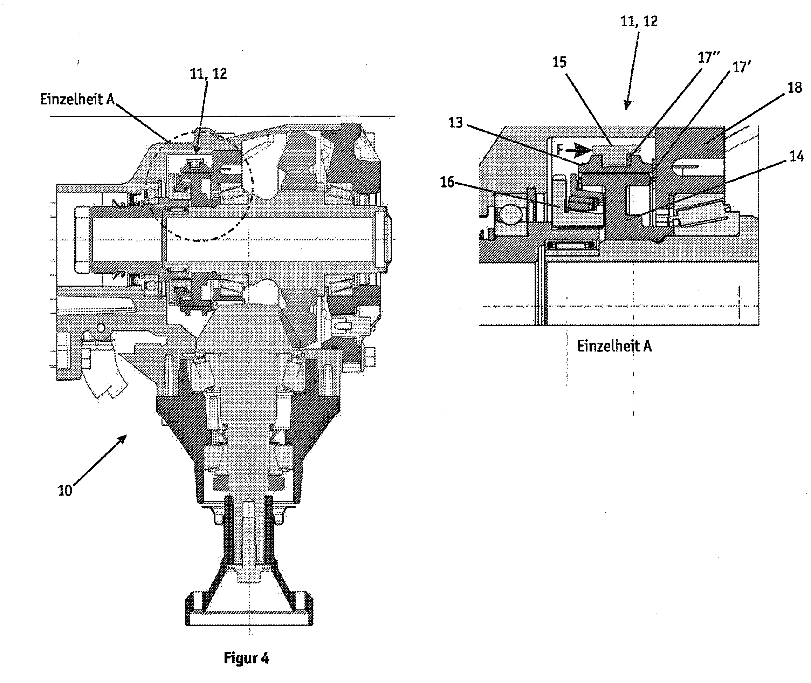

Damit der in Figur 1 dargestellte Sekundärteil des Antriebsstrangs dem Primärteil des Antriebstrangs auch während der Fahrt zugeschaltet oder von diesem entkoppelt werden kann, weist die PTU 10 eine Synchronisierung 11 auf. Figur 4 zeigt eine in einem Antriebsstrang entsprechend Figur 1 einsetzbare PTU 10 mit einer zusätzlichen Abbremsvorrichtung 12 zum Abbremsen des Sekundärteils des Antriebsstrangs, wobei die Abbremsvorrichtung 12 an der Synchronisierung 11 vorgesehen ist.

Die Synchronisierung 11 weist eine Schiebemuffe 13 auf, die drehfest aber axial verschieblich auf eine Führungsmuffe 14 aufgeschoben ist. In der Schiebemuffe 13 liegt eine Schaltgabel 15 auf, mittels der die Schiebemuffe 13 betätigbar ist. In Figur 4 ist die Schiebemuffe 13 in einer Position gezeigt, in der der Sekundärteil des Antriebsstrangs vom Primärteil entkoppelt ist. Um den Sekundarteil des Antriebsstrangs dem Primärteil zuzuschalten, müsste die Schiebemuffe in Figur 4 also nach links verschoben werden, um mit dem Mitnehmerring 16 in Eingriff zu kommen.

Seitlich neben der Schiebemuffe 13 ist eine schematisch dargestellte, zusätzliche Reibfläche 17' vorgesehen, die mit einem feststehenden Bauteil, das ein Bremsmoment abzustützen vermag (zum Beispiel Lagerbock 18), zusammenwirkt. Die Reibfläche ist bevorzugt an der Schiebemuffe 13 angeordnet, kann aber ebenso gut zusätzlich oder alternativ auch am feststehenden Bauteil vorgesehen sein.

Eine weitere Reibfläche 17" kann zusätzlich oder alternativ zu der Reibfläche 17' zwischen Schiebemuffe 13 und Schaltgabel 15 wirken. Auch hier kann die Reibfläche 17" an einem der beiden oder an beiden Bauteilen vorgesehen sein.

Wird nun der Sekundärteil des Antriebsstrangs vom Primärteil durch Verschieben der Synchronisierung in die in Figur 4 gezeigte Position abgekoppelt, so kann dadurch, dass die Schiebemuffe 13 bzw. die Schaltgabel 15 gezielt gegen die Reibflächen 17' bzw. 17" angestellt werden, ein Reibmoment erzeugt werden, durch den die Antriebsglieder des Sekundärteils des Antriebsstrangs abgebremst werden. Dies unterbricht den Ölfluss in der in den Figuren 2 und 3 gezeigten Ausgleichseinheit, so dass die Kupplungen trockenlaufen können und die Übertragung des Schleppmoments von den Sekundärantriebsrädern über die Halbwellen in die sekundärteilseitige Kupplungsvorrichtung deutlich minimiert wird. Die Kupplungslamellen laufen in der Folge äußert reibungsarm, der Sekundärteil des Antriebstrangs steht still.

Die in Figur 4 gezeigte Synchronisierung 11 ist außerdem auch in Folge ihrer speziellen Anordnung besonders reibungsarm. Während üblicherweise die Führungsmuffe 14 auf den permanent rotierenden Antriebsgliedern des Primärteils des Antriebsstrangs positioniert ist und der Mitnehmerring 16 sich auf den beim Synchronisierungsvorgang zu beschleunigenden Antriebsgliedern des Sekundärteils des Antriebsstrangs befindet, ist dies bei der in Figur 4 dargestellten Variante genau umgekehrt. Dies führt dazu, dass, wenn der Sekundärteil des Antriebsstrangs entkoppelt ist und steht, auch die Führungsmuffe 14 und die Schiebemuffe 13 still stehen, so dass zwischen Schaltgabel 15 und Schiebmuffe keine Reibung und somit keine Verlustleistung auftreten kann. Außerdem ermöglicht erst diese Ausgestaltung ein Abbremsen des Sekundärteils des Antreibstrangs über die Synchronisierung, da andernfalls über die Schiebemuffe oder die Schaltgabel kein auf die Antriebsglieder des Sekundärteils des Antriebsstrangs wirkendes Bremsmoment erzeugbar wäre.

### Bezugszeichenliste

- 1: Ausgleicheinheit
- 2: Sekundärantriebsräder
- 3: Seitenwellenkupplung
- 4: Halbwellen
- 5: Tellerrad
- 6: Ölauffangtasche
- 7: Ölzuführungskanäle
- 8: Ölförderring
- 9: Schottwand
- 10: Power-Takeoff-Unit (PTU)
- 11: Synchronisierung
- 12: Abbremsvorrichtung
- 13: Schiebemuffe
- 14: Führungsmuffe
- 15: Schaltgabel
- 16: Mitnehmerring
- 17', 17": Reibfläche
- 18: Lagerbock
- 19: Zwischenwelle

## Patentansprüche

1. Ausgleichseinheit (1), eingerichtet für den Einsatz in einem Antriebsstrang eines Kraftfahrzeugs, der einen permanent angetriebenem Primärteil für den permanenten Antrieb von Primärantriebsrädern sowie einen Sekundärteil für den Antrieb von Sekundärantriebsrädern (2) aufweist, der im Bedarfsfall vom Primärteil und den Sekundärantriebsrädern (2) abkoppelbar bzw. diesen zuschaltbar ist, wobei die Ausgleichseinheit Antriebsglieder aufweist, die eine Eingangswelle sowie zumindest eine erste Ausgangswelle (4) umfassen, wobei die erste Ausgangswelle (4) mit einer zweiten Ausgangswelle oder mit der Eingangswelle oder mit einer von der Eingangswelle angetriebenen Zwischenwelle (19) über eine Kupplungsvorrichtung (3) koppelbar ist, die über eine unmittelbar oder mittelbar über die Antriebsglieder angetriebene Ölfördereinrichtung mit Öl zu versorgen ist,
**dadurch gekennzeichnet, dass**
die Ölfördereinrichtung von der Kupplungsvorrichtung (3) räumlich-funktional getrennt ist, dass die die Olfördereinrichtung antreibenden Antriebsglieder Teil des Sekundärteils des Antriebsstrangs sind, der bei bestimmungsgemäßem Einsatz der Ausgleichseinheit und abgekoppeltem Sekundärteil vom Primärteil und den Sekundärantriebsrädern (2) abgekoppelt ist, und dass eine Abbrems- oder Entkopplungsvorrichtung (12) vorgesehen ist, mittels der die Ölfördereinrichtung (5) bei nicht bestehendem Beölungsbedarf der Kupplungsvorrichtung (3) stillgelegt werden kann.

2. Ausgleichseinheit nach Anspruch 1, **dadurch gekennzeichnet, dass** die Ölfördereinrichtung von einem von der Kupplungsvorrichtung (3) entfernt angeordneten Ölförderrad (5) gebildet ist.

3. Ausgleichseinheit nach einem der beiden vorhergehenden Ansprüche, **dadurch gekennzeichnet, dass** das Ölförderrad (5) derart ausgebildet ist, dass es das Öl aus einem Ölsumpf mit einem unterhalb der Kupplungsvorrichtung (3) liegenden Ölspiegels zu fördern vermag.

4. Ausgleichseinheit nach einem der beiden vorhergehenden Ansprüche, **dadurch gekennzeichnet, dass** das Ölförderrad (5) von einem auf der Zwischenwelle (19) angeordneten Tellerrad (5) gebildet ist.

5. Ausgleichseinheit nach einem der drei vorhergehenden Ansprüche, **dadurch gekennzeichnet, dass** das Ölförderrad (5) ein auf der Zwischenwelle (19) angeordnetes Tellerrad (5) umfasst, wobei das Tellerrad (5) radial nach außen durch einen Ölförderring (8) erweitert ist.

6. Ausgleichseinheit nach einem der vorhergehenden Ansprüche in Verbindung mit Anspruch 2, **dadurch gekennzeichnet, dass** an der Innenseite des Gehäuses zumindest teilumlaufende Schottwände (9) vorgesehen sind, die beim Ölfördervorgang das seitliche Abfließen des vom Ölförderrad (5) mitgenommenen Öls minimieren.

7. Ausgleichseinheit nach einem der vorhergehenden Ansprüche, **dadurch gekennzeichnet, dass** die Abbremsvorrichtung (12) eine Schiebemuffe (13) einer Synchronisierungseinrichtung umfasst, die mit einem feststehenden Teil des Kraftfahrzeugs über eine Reibfläche (17', 17") zusammenwirkt und ein Bremsmoment zur Abbremsung der stillzulegenden Antriebsglieder zu erzeugen vermag.

8. Ausgleichseinheit nach dem vorhergehenden Anspruch, **dadurch gekennzeichnet, dass** sich die Schiebemuffe (13) zur Erzeugung des Reibmoments gegen einen Lagerbock (18) abstützt.

9. Ausgleichseinheit nach einem der beiden vorhergehenden Ansprüche, **dadurch gekennzeichnet, dass** sich die Schiebemuffe (13) zur Erzeugung des Reibmoments gegen eine Schaltgabel (15) der Synchronisierungseinrichtung abstützt.

10. Antriebsstrang für ein Kraftfahrzeug, wobei der Antriebsstrang einen permanent angetriebenen Primärteil für den permanenten Antrieb von Primärantriebsrädern sowie einen Sekundärteil für den Antrieb von Sekundärantriebsrädern (2) aufweist, wobei der Sekundärteil im Bedarfsfall vom Primärteil und den Sekundärantriebsrädern (2) abkoppelbar bzw. diesen zuschaltbar ist,
**dadurch gekennzeichnet, dass**
im Sekundärteil eine unmittelbar oder mittelbar über Antriebsglieder des Sekundärteils angetriebene Ölfördereinrichtung sowie eine Abbremseinrichtung (12) vorgesehen ist, mittels der der Sekundärteil im vom Primärteil und von den Sekundärantriebsrädern abgekoppelten Zustand unter Stilllegung der Ölfördereinrichtung abgebremst werden kann.

11. Antriebsstrang nach dem vorhergehenden Anspruch in Verbindung mit einer Ausgleichseinheit nach einem der Ansprüche 1 bis 9.

## Claims

1. An equalisation unit (1), designed for use in a drive train of a motor vehicle, which has a continuously driven primary part for the continuous driving of primary drive wheels and a secondary part for the driving of secondary drive wheels (2), which can be coupled to and disconnected from the primary part and the secondary drive wheels (2) if required, wherein the equalisation unit has drive members, which comprise an input shaft and at least one first output shaft (4), wherein the first output shaft (4) can be coupled to a second output shaft or to the input shaft or to an intermediate shaft (19), which is driven by the input shaft, by means of a clutch device (3), which is to be supplied with oil by means of an oil-delivering device, which is driven directly or indirectly by means of the drive members, **characterised in that**
the oil-delivering device is spatially and functionally separate from the clutch device (3), that the drive members driving the oil-delivering device are part of the secondary part of the drive train, which is disconnected from the primary part and the secondary drive wheels (2) when the equalisation unit is used as intended and the secondary part is disconnected, and that a braking or decoupling device (12) is provided, by means of which the oil-delivering device (5) can be immobilised when the clutch device (3) does not need oiling.

2. The equalisation unit according to claim 1, **characterised in that** the oil-delivering device is formed by an oil-delivering wheel (5), which is arranged at a distance from the clutch device (3).

3. The equalisation unit according to any one of the two preceding claims, **characterised in that** the oil-delivering wheel (5) is formed in such a manner that it can deliver the oil out of an oil sump with an oil level lying below the clutch device (3).

4. The equalisation unit according to any one of the two preceding claims, **characterised in that** the oil-delivering wheel (5) is formed by a crown wheel (5), which is arranged on the intermediate shaft (19).

5. The equalisation unit according to any one of the three preceding claims, **characterised in that** the oil-delivering wheel (5) comprises a crown wheel (5), which is arranged on the intermediate shaft (19), wherein the crown wheel (5) is widened radially outwardly by means of an oil-delivering ring (8).

6. The equalisation unit according to any one of the preceding claims in conjunction with claim 2, **characterised in that** at least partially circumferential partitions (9) are provided on the inside of the housing, which partitions minimise the lateral flowing away of the oil conveyed by the oil-delivering wheel (5) during the oil-delivering process.

7. The equalisation unit according to any one of the preceding claims, **characterised in that** the braking device (12) comprises a sliding sleeve (13) of a synchronisation device, which interacts with a stationary part of the motor vehicle by means of a friction surface (17', 17") and can generate a braking moment in order to brake the drive members to be immobilised.

8. The equalisation unit according to the preceding claim, **characterised in that** the sliding sleeve (13) for generating the frictional moment is supported against a bearing bracket (18).

9. The equalisation unit according to any one of the two preceding claims, **characterised in that** the sliding sleeve (13) for generating the frictional moment is supported against a shift fork (15) of the synchronisation device.

10. A drive train for a motor vehicle, wherein the drive train has a continuously driven primary part for the continuous driving of primary drive wheels and a secondary part for driving secondary drive wheels (2), wherein the secondary part can be coupled to and disconnected from the primary part and the secondary drive wheels (2) if required,
**characterised in that**
an oil-delivering device, which is driven directly or indirectly by means of drive members of the secondary part, and a braking device (12), by means of which the secondary part can be braked while disconnected from the primary part and from the secondary drive wheels and while the oil-delivering device is immobilised, are provided in the secondary part.

11. The drive train according to the preceding claim in conjunction with an equalisation unit according to any one of claims 1 to 9.

## Revendications

1. Unité de compensation (1), conçue en vue d'une utilisation dans une chaîne cinématique d'un véhicule automobile, qui présente une partie primaire entraînée de manière permanente pour l'entraînement permanent de roues d'entraînement primaires ainsi qu'une partie secondaire pour l'entraînement de roues d'entraînement secondaires (2), qui en cas de besoin peut être découplée de la partie primaire et des roues d'entraînement secondaires (2) ou raccordées à ceux-ci, dans laquelle l'unité de compensation présente des organes d'entraînement, qui comprennent un arbre d'entrée ainsi qu'au moins un premier arbre de sortie (4), dans laquelle le premier arbre de sortie (4) peut être couplé à un deuxième arbre de sortie ou à l'arbre d'entrée ou avec un arbre intermédiaire (19) entraîné par l'arbre d'entrée par l'intermédiaire d'un dispositif d'embrayage (3), qui doit être alimentée en huile par l'intermédiaire d'un dispositif de transport d'huile entraîné directement ou indirectement par les organes d'entraînement,
**caractérisée en ce que**
le dispositif de transport d'huile est séparé de manière spatialement fonctionnelle du dispositif d'embrayage (3), **en ce que** les organes d'entraînement entraînant le dispositif de transport d'huile font partie de la partie secondaire de la chaîne cinématique, qui lors d'une utilisation conforme de l'unité de compensation et de la partie secondaire découplée est découplée de la partie primaire et des roues d'entraînement secondaires (2), et **en ce que** un dispositif de freinage ou de découplage (12) est prévu, au moyen duquel la direction de transport d'huile (5) peut être arrêtée en l'absence de besoin d'huilage du dispositif d'embrayage (3).

2. Unité de compensation selon la revendication 1, **caractérisée en ce que** le dispositif de transport d'huile est formé par une roue de transport d'huile (5) disposée en éloignement du dispositif d'embrayage (3).

3. Unité de compensation selon une des deux revendications précédentes, **caractérisée en ce que** la roue de transport d'huile (5) est conçue de telle sorte qu'elle puisse transporter de l'huile depuis un réservoir d'huile avec un niveau d'huile situé au-dessous du dispositif d'embrayage (3).

4. Unité de compensation selon une des deux revendications précédentes, **caractérisée en ce que** la roue de transport d'huile (5) est formée par une couronne dentée (5) disposée sur l'arbre intermédiaire (19).

5. Unité de compensation selon une des trois revendications précédentes, **caractérisée en ce que** la roue de transport d'huile (5) comprend une couronne dentée (5) disposée sur l'arbre intermédiaire (19), dans laquelle la couronne dentée (5) est élargie radialement vers l'extérieur par une bague de transport d'huile (8).

6. Unité de compensation selon une des revendications précédentes en liaison avec la revendication 2, **caractérisée en ce que** sur le côté intérieur du logement, des parois étanches (9) au moins partiellement circonférentielles sont prévues, qui minimisent lors du processus de transport d'huile l'évacuation latérale de l'huile absorbée par la roue de transport d'huile (5).

7. Unité de compensation selon une des revendications précédentes, **caractérisée en ce que** le dispositif de freinage (12) comprend un manchon coulissant (13) d'un dispositif de synchronisation, qui coopère avec une partie stationnaire du véhicule automobile par l'intermédiaire d'une surface de friction (17',17") et peut générer un couple de friction pour freiner les organes d'entraînement à arrêter.

8. Unité de compensation selon la revendication précédente, **caractérisée en ce que** le manchon coulissant (13) s'appuie afin de générer le couple de friction contre un support de palier (18).

9. Unité de compensation selon une des deux revendications précédentes, **caractérisée en ce que** le manchon coulissant (13) s'appuie afin de générer le couple de friction contre une fourche de commutation (15) du dispositif de synchronisation.

10. Chaîne cinématique pour véhicule automobile, dans laquelle la chaîne cinématique présente une partie primaire entraînée de manière permanente pour l'entraînement permanent de roues d'entraînement primaires ainsi qu'une partie secondaire pour l'entraînement de roues d'entraînement secondaires (2), dans laquelle la partie secondaire en cas de besoin peut être découplée de la partie primaire et des roues d'entraînement secondaires (2) ou raccordée à ceux-ci,
**caractérisée en ce que**
dans la partie secondaire un dispositif de transport d'huile entraîné directement ou indirectement par l'intermédiaire d'organes d'entraînement de la partie secondaire ainsi qu'un dispositif de freinage (12) est prévu, au moyen duquel la partie secondaire dans l'état découplé de la partie primaire et des roues d'entraînement secondaires peut être freinée en arrêtant le dispositif de transport d'huile.

11. Chaîne cinématique selon la revendication précédente en liaison avec une unité de compensation selon une des revendications 1 à 9.
